# EUROPEAN PATENT APPLICATION

(11) **EP 4 806 245 A1**
(43) Date of publication of application: **16.09.2026**
(21) Application number: 26163355.6
(22) Date of filing: 09.03.2026
(51) Int. Cl.: A01B 69/04

(54) **AUTOMATIC TRAVEL METHOD, AUTOMATIC TRAVEL PROGRAM, AND AUTOMATIC TRAVEL SYSTEM**

(30) Priority: 10.03.2025 JP 2025037227
(71) Applicant: Yanmar Holdings Co., Ltd., Osaka (JP)
(72) Inventor: MUKAI, Kota, Osaka-shi (JP); MIYAKE, Koji, Okayama-shi (JP); ISHIDA, Hiroyasu, Okayama-shi (JP); ONISHI, Kenta, Okayama-shi (JP); TAKAHASHI, Mamoru, Okayama-shi (JP); KIYOSAWA, Yu, Okayama-shi (JP); KATO, Mikiya, Osaka-shi (JP); ENDO, Taisei, Osaka-shi (JP)
(74) Representative: Sekiguchi, Kazuya

(57) **Abstract**

[Problem] To provide an automatic travel method, an automatic travel program, and an automatic travel system capable of avoiding a decrease in work efficiency when a work vehicle detects a detection target during automatic travel.

[Solution] In an automatic travel system 10, a travel processing part 111 causes a combine harvester 1 to automatically travel along a target route in a farm field. A determination processing part 612 determines, in a case where an obstacle sensor 64 capable of detecting a detection target within a predetermined range detects the detection target, whether the detection target is an obstacle that obstructs travel of the combine harvester 1, on the basis of a planned travel route on which the combine harvester 1 is planned to travel from a time point at which the obstacle sensor 64 detects the detection target.

## Description

### TECHNICAL FIELD

The present invention relates to an automatic travel method when a detection target is detected by a work vehicle.

### BACKGROUND ART

Conventionally, a technique is known in which a work vehicle is caused to perform automatic travel along a preset target route in a work area. Further, a technique is also known in which presence or absence of an obstacle is determined by measuring a distance from an object present in a travel direction of a work vehicle, and in which collision avoidance control for avoiding collision is performed on the work vehicle on condition that the obstacle is within a predetermined detection range (see, for example, Patent Document 1).

### PRIOR ART DOCUMENT

### PATENT DOCUMENT

Patent Document 1: JP-A-2021-65115

### SUMMARY OF INVENTION

### TECHNICAL PROBLEM

However, in the conventional technique, for example, even in a case where an object located in a place different from a place in a travel direction of a work vehicle is detected, the object is determined to be an obstacle and collision avoidance control is performed. In this manner, when an object (detection target) having a low possibility of colliding with the work vehicle that automatically travels is determined to be an obstacle and collision avoidance control is performed, there arises such a problem that work efficiency decreases in work through automatic travel of the work vehicle.

It is an object of the present invention to provide an automatic travel method, an automatic travel program, and an automatic travel system capable of avoiding a decrease in work efficiency when a work vehicle detects a detection target during automatic travel.

### SOLUTIONS TO PROBLEM

An automatic travel method according to the present invention is an automatic travel method including: causing a work vehicle to automatically travel along a target route in a work area; and determining, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

Further, an automatic travel program according to the present invention is an automatic travel program that causes one or more processors to execute: causing a work vehicle to automatically travel along a target route in a work area; and determining, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

Further, an automatic travel system according to the present invention includes a travel processing part and a determination processing part. The travel processing part causes a work vehicle to automatically travel along a target route in a work area. The determination processing part determines, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

### ADVANTAGEOUS EFFECTS OF INVENTION

According to the present invention, it is possible to provide an automatic travel method, an automatic travel program, and an automatic travel system capable of avoiding a decrease in work efficiency when a work vehicle detects a detection target during automatic travel.

### BRIEF DESCRIPTION OF DRAWINGS

Fig. 1 is a block diagram showing a configuration of an automatic travel system according to an embodiment of the present invention;
Fig. 2 is an external side view showing a configuration of a combine harvester according to the embodiment of the present invention;
Fig. 3 is an external top view showing a configuration of the combine harvester according to the embodiment of the present invention;
Fig. 4 is a diagram showing an example of a target route set for a farm field according to the embodiment of the present invention;
Fig. 5 is a diagram showing an example of a work procedure for the combine harvester according to the embodiment of the present invention;
Fig. 6 is a view showing an example of a position (lowest position) of a reaping part of the combine harvester according to the embodiment of the present invention;
Fig. 7 is a view showing an example of a position (highest position) of the reaping part of the combine harvester according to the embodiment of the present invention;
Fig. 8 is a diagram showing a specific example of obstacle determination processing executed by the combine harvester according to the embodiment of the present invention;
Fig. 9 is a diagram showing a specific example of the obstacle determination processing executed by the combine harvester according to the embodiment of the present invention;
Fig. 10 is a flowchart showing an example of a procedure of automatic travel processing executed by the automatic travel system according to the embodiment of the present invention;
Fig. 11 is a diagram showing a specific example of obstacle determination processing executed by a combine harvester according to an embodiment of the present invention;
Fig. 12 is a diagram showing a specific example of the obstacle determination processing executed by the combine harvester according to the embodiment of the present invention;
Fig. 13 is a diagram showing a specific example of the obstacle determination processing executed by the combine harvester according to the embodiment of the present invention; and
Fig. 14 is a diagram showing a specific example of obstacle determination processing executed by a combine harvester according to an embodiment of the present invention.

### DESCRIPTION OF EMBODIMENTS

Each of the following embodiments is an example embodying the present invention, and is not intended to limit the technical scope of the present invention.

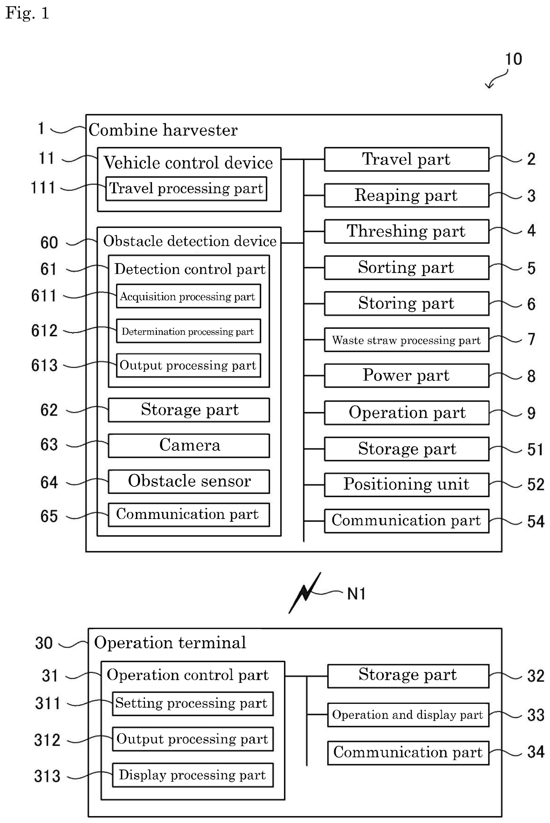

A combine harvester 1 will be described as an example of a work vehicle of the present invention. Note that the work vehicle of the present invention is not limited to the combine harvester, and may be a tractor, a rice transplanter, a sprayer, a construction machine, a snowplow, or the like. As shown in Fig. 1, an automatic travel system 10 according to an embodiment of the present invention includes the combine harvester 1 and an operation terminal 30. The combine harvester 1 and the operation terminal 30 can communicate with each other via a communication network N1. For example, the combine harvester 1 and the operation terminal 30 can communicate with each other via a mobile phone line network, a packet line network, or a wireless LAN.

The combine harvester 1 is a work vehicle that performs agricultural work such as reaping in a farm field. The combine harvester 1 performs work while traveling, and transmits GNSS information on a GNSS antenna mounted on the combine harvester 1, that is, a vehicle position of the combine harvester 1, to the operation terminal 30 as measurement point data.

In addition, the combine harvester 1 can automatically travel along a preset target route. Note that the combine harvester 1 may be configured to automatically travel in a partial area (for example, a straight route) of a farm field and manually travel in another area (for example, a turning route) of the farm field. Moreover, the combine harvester 1 receives various types of setting information from the operation terminal 30, and automatically travels in accordance with the setting information.

The operation terminal 30 is a portable terminal capable of remotely operating the combine harvester 1, and includes, for example, a tablet terminal, a laptop personal computer, a smartphone, or the like. Note that an operation device similar to the operation terminal 30 may be mounted in the combine harvester 1.

The operator (worker) can perform setting operations regarding various setting items on the operation terminal 30. In addition, the operation terminal 30 causes information such as a work situation and a travel situation of the combine harvester 1 during automatic travel to be displayed, and the operator can grasp the work situation and the travel situation on the operation terminal 30. Note that in the present invention, the operation terminal 30 may be omitted.

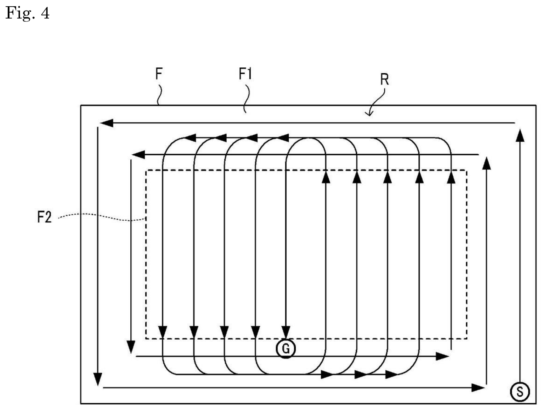

Fig. 4 shows an example of a target route R set for a farm field F. For example, in the farm field F, the combine harvester 1 performs reaping work ("circling reaping", "reciprocating reaping") from a work start position S to a work end position G along the target route R, while traveling from an outer peripheral side toward an inner peripheral side. Specifically, in an outer peripheral area F1 on the outer peripheral side in the farm field F, the combine harvester 1 performs reaping work while traveling along a farm field edge (outer periphery). In addition, in an inner peripheral area F2 on an inner peripheral side of the farm field F, the combine harvester 1 performs reaping work while performing straight travel on each work route in the vertical direction of Fig. 4, and performs turning travel and straight travel, without performing reaping work, to move between work routes in the left-right direction of Fig. 4.

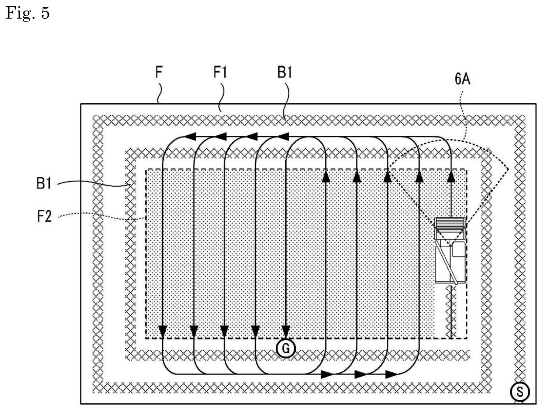

An example of a work procedure for the combine harvester 1 will be described with reference to Fig. 5. First, when the combine harvester 1 starts automatic travel at the work start position S, the combine harvester 1 travels along an outer periphery of the farm field F while reaping grain stalks. In addition, after threshing the reaped grain stalks, the combine harvester 1 discharges waste straw such as straw chips to the outside from the rear of a machine body. As a result, waste straw B1 is piled up on the travel track of the combine harvester 1, and a waste straw row is formed on the route where the combine harvester 1 has finished its reaping work. Note that the combine harvester 1 is set up to discharge the waste straw of the reaped grain stalks to the position of the grain stalks of the reaping target, and is configured to be able to grasp the position, the width (lateral width in a left-right direction of the waste straw row), the length, and the like of the waste straw B1. For example, the waste straw B1 is discharged with a width narrower than the lateral width of the machine body, based on the center in a left-right direction of the combine harvester 1.

For example, the combine harvester 1 completes two laps for the outer peripheral area F1. In this case, waste straw rows for two laps are formed. Note that the number of laps for the outer peripheral area F1 is not limited to two, and may be one, or three or more.

After the combine harvester 1 finishes the reaping work in the outer peripheral area F1, the combine harvester 1 enters the inner peripheral area F2 and starts the reaping work in the inner peripheral area F2. In the inner peripheral area F2, the combine harvester 1 performs reaping work while performing straight travel on each work route in the vertical direction of Fig. 4, and performs turning travel and straight travel in the outer peripheral area F1 (worked area and reaped area), without performing reaping work, to move between work routes in the left-right direction of Fig. 4. The combine harvester 1 performs reaping work in the inner peripheral area F2, and when the combine harvester 1 arrives at the work end position G, the combine harvester 1 ends the automatic travel and the reaping work.

As described above, the combine harvester 1 performs reaping work while automatically traveling along the target route R in the farm field F. Note that the combine harvester 1 may be configured to automatically travel without an operator on board, or may be configured to automatically travel while the operator boards thereon and the operation of the operator is accepted. Further, in the combine harvester 1, the mode may be switchable between an automatic travel mode and a manual travel mode in accordance with a setting operation from the operator.

### [Combine Harvester 1]

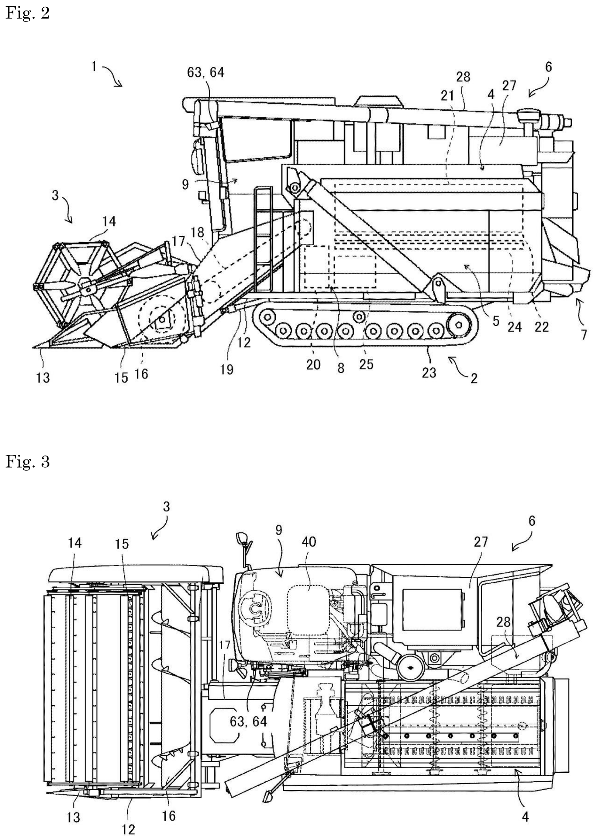

Fig. 2 shows an external view of the combine harvester 1 as viewed from a side, and Fig. 3 shows an external view of the combine harvester 1 as viewed from above. As shown in Figs. 1 to 3, the combine harvester 1 includes a travel part 2, a reaping part 3, a threshing part 4, a sorting part 5, a storing part 6, a waste straw processing part 7, a power part 8, an operation part 9, a vehicle control device 11, a storage part 51, a positioning unit 52, a communication part 54, an obstacle detection device 60, and the like. The combine harvester 1 travels with the travel part 2, reaps grain stalks with the reaping part 3, threshes the reaped grain stalks in the threshing part 4, and sorts the grains in the sorting part 5 and stores the grains in the storing part 6. In addition, the combine harvester 1 processes the waste straw after threshing in the waste straw processing part 7. The combine harvester 1 drives the travel part 2, the reaping part 3, the threshing part 4, the sorting part 5, the storing part 6, and the waste straw processing part 7, using power supplied by the power part 8.

The travel part 2 is provided below a machine body frame 12, and includes a pair of left and right crawler-type travel devices 23 and a transmission (not shown). The travel part 2 causes crawlers of the crawler-type travel device 23 to rotate by using power (for example, rotational power) transmitted from an engine 20 of the power part 8, whereby the travel part 2 causes the combine harvester 1 to travel in a forward-backward direction or turn in the left-right direction. The transmission transmits the power (rotational power) of the power part 8 to the crawler-type travel device 23, and can also change the speed of the rotational power.

The reaping part 3 is a work machine that performs work on the work target farm field F, and is provided in front of the travel part 2 to reap grain stalks having a predetermined reaping width in an area (hereinafter, referred to as an unreaped area) having unreaped grain stalks which is a yet-to-be-worked area of the farm field F. The reaping part 3 is an example of a work machine of the present invention. The reaping part 3 includes a divider 13, a raking reel 14, a cutting blade 15, a raking auger 16, a feeder house 17, and a conveyance conveyor 18. In addition, the reaping part 3 also includes a rotation detection part (not shown) that detects the rotation speed (work speed) of rotation work for performing reaping work. The rotation detection part includes a rotation sensor that detects, for example, the rotation speed of the raking reel 14, the rotation speed of the raking auger 16, the rotation speed of the conveyance conveyor 18, and the like.

The divider 13 is provided to protrude forward from a left front end and a right front end of the reaping part 3, and guides grain stalks in the unreaped area within the reaping width. The raking reel 14 is disposed behind the divider 13, and is provided to be rotatable about a rotation axis extending in the left-right direction. The raking reel 14 rakes the tip side of the grain stalk while lifting the grain stalks by rotationally driving to assist in reaping of the grain stalks guided by the divider 13. The cutting blade 15 is disposed below the raking reel 14, and cuts the base side of the grain stalks raked in by the raking reel 14 to reap the grain stalks.

The raking auger 16 is disposed behind the raking reel 14 and the cutting blade 15, and is provided to be rotatable about a rotation axis extending in the left-right direction. The raking auger 16 is driven to rotate, thereby raking the grain stalks reaped by the cutting blade 15 and conveying them rearward.

The feeder house 17 extends forward from the machine body frame 12 and is disposed behind the raking auger 16, and is supported on the machine body frame 12 to be able to be lifted and lowered. In addition, as the feeder house 17 is lifted or lowered, the divider 13, the raking reel 14, the cutting blade 15, and the raking auger 16 are lifted or lowered, that is, the reaping part 3 is lifted or lowered.

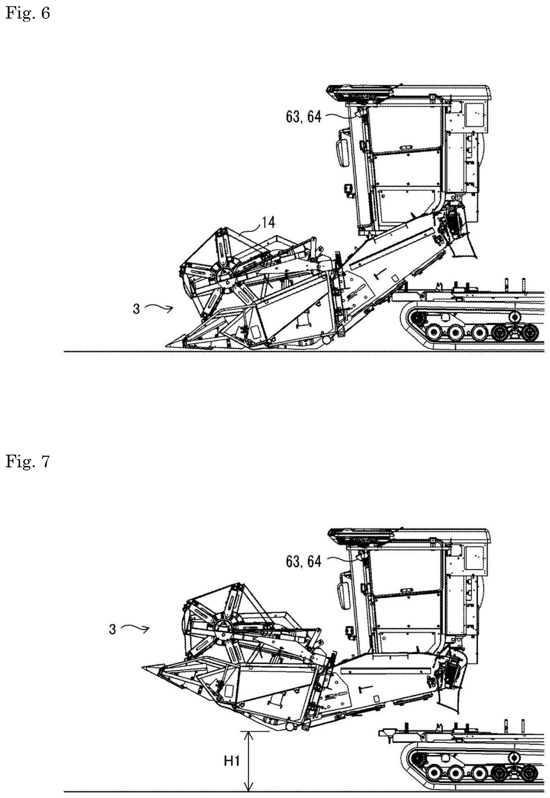

Note that the combine harvester 1 includes, in the machine body frame 12, a lifting device 19 that lifts and lowers the reaping part 3 by lifting and lowering the feeder house 17, and causes the reaping part 3 to be lifted and lowered between a work position (see Fig. 6) and a non-work position (see Fig. 7). The lifting device 19 includes, for example, a hydraulic cylinder or the like that is operated by receiving power from the engine 20.

The conveyance conveyor 18 is rotatably provided in the feeder house 17, and moves as the feeder house 17 is lifted or lowered. The conveyance conveyor 18 is driven to rotate, thereby conveying the grain stalks conveyed into the feeder house 17 by the raking auger 16 further rearward to the threshing part 4.

The threshing part 4 is provided behind the feeder house 17 of the reaping part 3, and threshes the grain stalks conveyed from the feeder house 17. The threshing part 4 includes a threshing cylinder 21 and a receiving net 22. The threshing cylinder 21 threshes grains from the grain stalks conveyed from the feeder house 17, and conveys the threshed grain stalks, that is, waste straw, to the waste straw processing part 7. The receiving net 22 supports the grain stalks conveyed by the threshing cylinder 21, and sieves the grains to allow the grains to fall.

The sorting part 5 is provided below the threshing part 4. The sorting part 5 includes a swing sorting device 24, an air blow sorting device 25, a grain conveyance device (not shown), and a straw chip discharge device (not shown). The swing sorting device 24 sieves the threshed material that has fallen from the threshing part 4 to sort it into grains, straw chips, and the like. The air blow sorting device 25 further sorts the threshed material that has fallen from the threshing part 4 and the threshed material sorted by the swing sorting device 24 into grains, straw chips, and the like by blowing air. The grain conveyance device conveys the grains sorted by the swing sorting device 24 and the air blow sorting device 25 to the storing part 6. The straw chip discharge device discharges straw chips and the like other than the grains sorted by the swing sorting device 24 and the air blow sorting device 25 to the outside of the machine.

The storing part 6 is provided on a right side of the threshing part 4. The storing part 6 includes a storage tank (grain tank) 27 and a grain discharge device 28. The storage tank 27 stores the grains conveyed from the sorting part 5. The grain discharge device 28 includes a discharge auger and the like, performs discharge work on grains, and discharges the grains stored in the storage tank 27 onto a transport vehicle at a preset discharge position.

The waste straw processing part 7 is provided behind the threshing part 4. The waste straw processing part 7 includes, for example, a waste straw conveyance device (not shown) and a waste straw cutting device (not shown). The waste straw processing part 7 conveys the waste straw conveyed from the threshing part 4 to the waste straw cutting device using the waste straw conveyance device, and after cutting the waste straw using the waste straw cutting device, discharges the waste straw to the rear of the combine harvester 1 (see Fig. 5).

The power part 8 is provided above the travel part 2 and below the storing part 6. The power part 8 includes the engine 20 that generates rotational power. The power part 8 transmits the rotational power generated by the engine 20 to the travel part 2, the reaping part 3, the threshing part 4, the sorting part 5, the storing part 6, and the waste straw processing part 7. In addition, the combine harvester 1 also includes a fuel tank that stores fuel to be supplied to the engine 20 of the power part 8.

The operation part 9 is provided above the power part 8. The operation part 9 is provided, around a driver's seat that is a seat 40 on which the operator sits, with operation tools for operating travel of the combine harvester 1, such as a steering wheel for providing an instruction on turning of the machine body of the combine harvester 1, a main shift lever and a sub shift lever for providing an instruction on changes in speeds of forward and backward movements of the combine harvester 1, and the like. The manual travel of the combine harvester 1 is performed by the travel part 2 that receives operations of the steering wheel, the main shift lever, and the sub shift lever of the operation part 9. In addition, the operation part 9 also includes mechanisms for operating the reaping work performed by the reaping part 3, the threshing work performed by the threshing part 4, the discharge work performed by the grain discharge device 28 of the storing part 6, and the like.

The positioning unit 52 acquires the vehicle position of the combine harvester 1 using a satellite positioning system such as a GPS. For example, the positioning unit 52 receives a positioning signal from a positioning satellite via a positioning antenna, and acquires position information of the positioning unit 52, that is, the vehicle position of the combine harvester 1 (measurement point data), on the basis of the positioning signal. The positioning unit 52 may include a quantum compass instead of the positioning antenna.

The communication part 54 is a communication interface for connecting the combine harvester 1 to the communication network N1 in a wired or wireless manner and for executing data communication according to a predetermined communication protocol with external equipment such as the operation terminal 30 via the communication network N1.

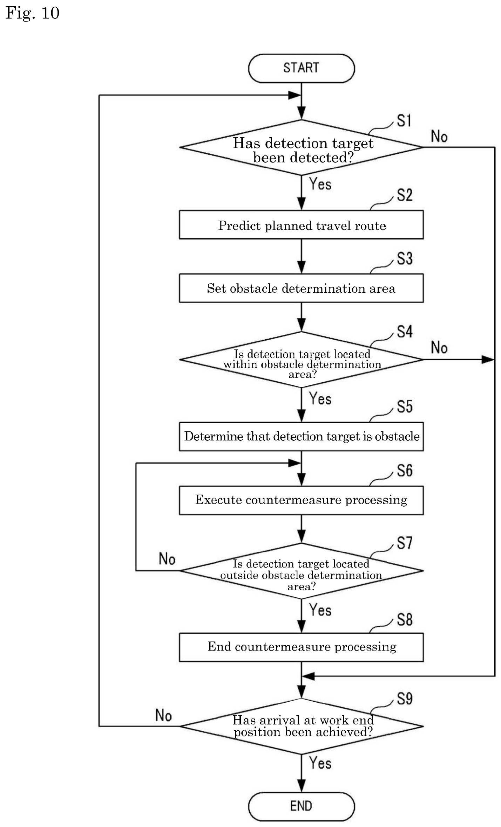

The storage part 51 is a non-volatile storage part such as a hard disk drive (HDD), a solid state drive (SSD), or a flash memory that stores various types of information. The storage part 51 stores a control program such as an automatic travel program for causing the vehicle control device 11 to execute automatic travel processing (see Fig. 10) to be described later. For example, the automatic travel program is recorded in a non-transitory manner in a computer-readable recording medium such as a flash ROM, an EEPROM, a CD, or a DVD, and is read by a predetermined reading device (not shown) and stored in the storage part 51. Note that the automatic travel program may be downloaded from a server (not shown) to the combine harvester 1 via the communication network N1 and may be stored in the storage part 51. In addition, the storage part 51 stores various types of setting information acquired from the operation terminal 30.

When the combine harvester 1 detects a detection target during automatic travel, the obstacle detection device 60 outputs measurement information to the vehicle control device 11. Note that the vehicle control device 11 and the obstacle detection device 60 may be capable of wireless communication. Specifically, the obstacle detection device 60 includes a detection control part 61, a storage part 62, a camera 63, an obstacle sensor 64, a communication part 65, and the like. Regarding the obstacle detection device 60, the obstacle detection device 60 may be configured as a single unit and mounted in the combine harvester 1, or a plurality of components of the obstacle detection device 60 may be arranged in a dispersed manner in the combine harvester 1.

The communication part 65 is a communication interface for connecting the obstacle detection device 60 to the communication network N1 in a wired or wireless manner and for executing data communication according to a predetermined communication protocol with external equipment (such as the operation terminal 30) via the communication network N1.

The storage part 62 is a non-volatile storage part such as an HDD, an SSD, or a flash memory that stores various types of information. The storage part 62 stores a control program such as an obstacle detection program for causing the obstacle detection device 60 to execute obstacle detection processing (see Fig. 10). The obstacle detection processing is included in the automatic travel processing, and the obstacle detection program may be included in the automatic travel program. For example, the obstacle detection program is recorded in a non-transitory manner in a computer-readable recording medium such as a CD or a DVD, and is read by a predetermined reading device (not shown) and stored in the storage part 62. Note that the obstacle detection program may be downloaded from a server (not shown) to the obstacle detection device 60 via the communication network N1 and may be stored in the storage part 62.

The camera 63 is a digital camera that captures an image of a subject included in a predetermined imaging range and that outputs the captured image as digital image data. The camera 63 continuously captures images of the subject at a predetermined frame rate, generates frame images (captured images) having a predetermined resolution, and sequentially transmits the frame images to the detection control part 61. In addition, the camera 63 transmits image data of the captured image to the operation terminal 30 via the communication part 65. The operation terminal 30 can cause the captured image to be displayed on an operation screen of an operation and display part 33.

The camera 63 may include a front camera that can capture an image in an imaging range in front of the combine harvester 1 as viewed from the combine harvester 1, a rear camera that can capture an image in an imaging range in the rear of the combine harvester 1 as viewed from the combine harvester 1, a left side camera that can capture an image in an imaging range to the left of the combine harvester 1 as viewed from the combine harvester 1, and a right side camera that can capture an image in an imaging range to the right of the combine harvester 1 as viewed from the combine harvester 1. Note that the camera 63 may simply include the front camera and the rear camera. Further, the camera 63 may be configured as a single camera and may be an omnidirectional camera that can capture images in all directions around the combine harvester 1.

The obstacle sensor 64 is a sensor that detects a detection target in a predetermined detection range by using infrared rays, ultrasonic waves, or the like. For example, the obstacle sensor 64 may be a lidar sensor (distance sensor) that can measure a distance to a detection target in three dimensions by using a laser, or may be a sonar sensor including a plurality of sonars that can measure a distance to a detection target by using an ultrasonic wave. The obstacle sensor 64 is installed at a center front portion, a center rear portion, or the like of the machine body of the combine harvester 1, and monitors the surroundings of the combine harvester 1 to detect an obstacle. In the present embodiment, as an example, a case will be described in which the obstacle sensor 64 includes a front obstacle sensor that can detect a detection target in a detection range in front of the combine harvester 1 as viewed from the combine harvester 1. As shown in Fig. 2, the obstacle sensor 64 is disposed on an upper front side of the operation part 9. A detection target in a predetermined detection range 6A (measurement range) (see Fig. 5) in front of the combine harvester 1 can be detected by the obstacle sensor 64. Note that the obstacle sensor 64 may include obstacle sensors that can detect detection targets in respective detection ranges 6A in the rear of, to the left of, and to the right of the combine harvester 1 as viewed from the combine harvester 1.

Fig. 5 shows an example of the detection range 6A of the obstacle sensor 64. For the obstacle sensor 64, the detection range 6A extending frontward from the operation part 9 is set as a measurement range, and the obstacle sensor 64 measures a distance to each distance measurement point (measurement target) present in the detection range 6A by using, for example, a laser (near-infrared laser light or the like), and, for example, generates a distance image on the basis of the measurement information. The obstacle sensor 64 includes an electronic control unit in which a microcontroller and the like are integrated, a processing part constructed by various control programs and the like, and is connected to the detection control part 61, the vehicle control device 11, and the like via a CAN to be able to communicate with each other.

The obstacle sensor 64 measures a distance from the obstacle sensor 64 to a distance measurement point by using a time-of-flight (TOF) method in which the distance to the distance measurement point is measured on the basis of a round-trip time period during which an emitted laser reaches the distance measurement point and returns from the distance measurement point. The obstacle sensor 64 performs three-dimensional measurement in the detection range 6A by vertically and horizontally scanning over the entire detection range 6A at a high speed with the laser, and sequentially measuring the distance to the distance measurement point for each scanning angle (coordinates). The obstacle sensor 64 sequentially measures intensity (reflection intensity) of the acquired reflection light from each distance measurement point. The obstacle sensor 64 repeatedly measures the distance to each distance measurement point in the detection range 6A, each reflection intensity, and the like in real time.

The obstacle sensor 64 generates a distance image and extracts a distance measurement point group estimated as an obstacle from measurement information such as the measured distance to each distance measurement point and the scanning angle (coordinates) with respect to each distance measurement point, and transmits measurement information regarding the extracted distance measurement point group to the detection control part 61 as measurement information regarding an obstacle.

Further, a vehicle control range may be set in the detection range 6A, and the vehicle control device 11 may be able to execute processing (countermeasure processing) in accordance with the position of a detection target.

For example, the detection range 6A may be divided into a stop control range, a deceleration control range, and a notification control range, on the basis of collision determination processing in which a predicted collision time period is a set time period (for example, 3 seconds). Specifically, the stop control range is set to a range from the obstacle sensor 64 to a determination reference position of the collision determination processing. The deceleration control range is set to a range from the determination reference position to a deceleration start position. The notification control range is set to a range from the deceleration start position to a measurement limit position of the obstacle sensor 64. The determination reference position is set at a position away from the front end of the vehicle body including the reaping part 3 in the front direction of the vehicle body by a certain distance L1 (for example, 2 m). For example, a range from the combine harvester 1 to the distance L1 is set as the stop control range, a range from the distance L1 to a distance L2 (for example, 5 m or less) is set as the deceleration control range, and a range from the distance L2 to a distance L3 (for example, 10 m or less) is set as the notification control range. The vehicle control device 11 executes countermeasure processing such as stop, deceleration, and notification in accordance with the position of a detected obstacle (each control range).

Note that, the vehicle control range can be set in accordance with a type, a model, work content, a vehicle speed, or the like of the work vehicle. Further, processing (masking processing) may be executed in which a range into which the front end side of the reaping part 3 enters is set as a non-detection range with masking processing and the non-detection range is excluded from the detection range 6A.

The detection control part 61 outputs the measurement information acquired from the obstacle sensor 64 to the vehicle control device 11. The detection control part 61 sequentially outputs the measurement information to the vehicle control device 11 every time the measurement information is acquired from the obstacle sensor 64 while the combine harvester 1 automatically travels. As another embodiment, the detection control part 61 may determine a type (a person, a vehicle, a structure, a material, or the like) of a detection target (measurement target), on the basis of a captured image acquired from the camera 63 and measurement information acquired from the obstacle sensor 64, and output the determination result to the vehicle control device 11. A case in which a detection target in front of the combine harvester 1 is detected when the combine harvester 1 travels forward will be described below as an example, and description of an example of a case in which a detection target in the rear of the combine harvester 1 is detected when the combine harvester 1 travels backward will be omitted.

The detection control part 61 includes control units such as a CPU, a ROM, and a RAM. The CPU is a processor that executes various types of calculation processing. The ROM is a non-volatile storage part in which control programs such as a BIOS and an OS for causing the CPU to execute the various types of calculation processing are stored in advance. The RAM is a volatile or non-volatile storage part that stores various types of information, and is used as a temporary storage memory (work region) for various types of processing executed by the CPU. Moreover, the detection control part 61 controls the obstacle detection device 60 by executing, with the CPU, various control programs stored in advance in the ROM or the storage part 62.

Specifically, as shown in Fig. 1, the detection control part 61 includes various processing parts such as an acquisition processing part 611, a determination processing part 612, and an output processing part 613. Note that the detection control part 61 functions as the various processing parts by executing, with the CPU, various types of processing according to the obstacle detection program. Further, a part or all of the processing parts may be configured with an electronic circuit. Note that the obstacle detection program may be a program for causing a plurality of processors to function as the processing part.

The acquisition processing part 611 acquires a captured image from the camera 63, and acquires measurement information from the obstacle sensor 64. Specifically, when the combine harvester 1 starts automatic travel, the acquisition processing part 611 sequentially acquires captured images in an imaging range frontward in the travel direction from the camera 63 during the automatic travel. The acquisition processing part 611 stores the acquired captured image in the storage part 62. In addition, when the combine harvester 1 starts automatic travel, the acquisition processing part 611 sequentially acquires measurement information (a distance measurement point group, a distance image, or the like) of the detection range 6A (see Fig. 2) frontward in the travel direction from the obstacle sensor 64 during the automatic travel. The acquisition processing part 611 stores the acquired measurement information in the storage part 62.

The determination processing part 612 determines whether a detection target is an obstacle that obstructs the travel of the combine harvester 1, on the basis of the measurement information (the captured image, the distance measurement point group, the distance image, or the like) acquired by the acquisition processing part 611.

Specifically, when the obstacle sensor 64 detects a detection target within the detection range 6A, the determination processing part 612 determines whether the detection target is an obstacle, on the basis of a planned travel route on which the combine harvester 1 is planned to travel from a time point at which the obstacle sensor 64 detects the detection target. The planned travel route is, for example, a partial route of the target route R, or a route generated on the basis of the current position of the combine harvester 1 at a time point at which the obstacle sensor 64 detects the detection target and the target route R. In addition, the planned travel route is a predicted route on which the combine harvester 1 travels for a predetermined time period from a time point at which the obstacle sensor 64 detects the detection target.

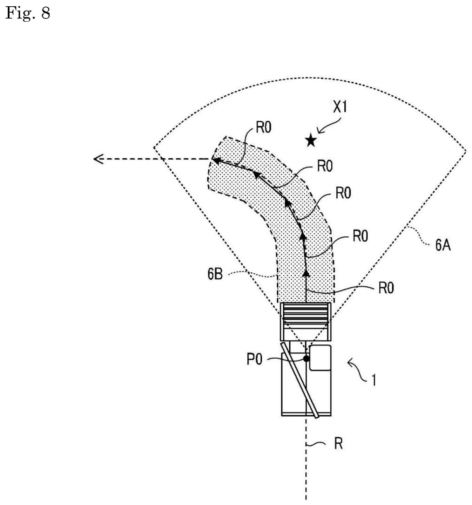

For example, as shown in Fig. 8, when the combine harvester 1 automatically travels along the target route R, the determination processing part 612 predicts (simulates) a travel route (planned travel route R0) from a current position PO to a position to be reached after a predetermined time period T1. For example, the determination processing part 612 generates, as the planned travel route R0, a straight route corresponding to a distance that the combine harvester 1 can travel for the predetermined time period T1. Note that Fig. 8 shows five planned travel routes R0 for respective predetermined time periods T1, that is, five simulation results, in an overlapping manner. Here, the determination processing part 612 predicts a first planned travel route R0 by performing a first simulation at the current position P0, predicts a second planned travel route RO by performing a second simulation, at a position after a predetermined time period T1 elapses from the position P0, predicts a third planned travel route R0 by performing a third simulation, at a position after the next predetermined time period T1 elapses, predicts a fourth planned travel route R0 by performing a fourth simulation, at a position after the next predetermined time period T1 elapses, and predicts a fifth planned travel route R0 by performing a fifth simulation, at a position after the next predetermined time period T1 elapses. In this manner, the determination processing part 612 predicts (simulates) the planned travel route R0 at a current position at that time point, for each predetermined time period T1. The determination processing part 612 performs the simulation while the combine harvester 1 automatically travels from the work start position S to the work end position G.

Here, for example, the determination processing part 612 sets, to the predetermined time period T1, a time obtained by adding a margin time period to a time period that is required for the safe stop of the combine harvester 1 from a time point of detection of a detection target. In addition, the determination processing part 612 sets the predetermined time period T1 in accordance with the vehicle speed of the combine harvester 1. For example, the determination processing part 612 sets the predetermined time period T1 to be longer as the vehicle speed of the combine harvester 1 is faster, and sets the predetermined time period T1 to be shorter as the vehicle speed of the combine harvester 1 is slower. In addition, the determination processing part 612 may set the predetermined time period T1, on the basis of a type of a route at the current position of the combine harvester 1, for example, a straight route, a turning route, a work route, or a non-work route. Further, the determination processing part 612 may set the predetermined time period T1, on the basis of a model, a type, and work content of the work vehicle.

In addition, in the example shown in Fig. 8, since the combine harvester 1 is traveling on the target route R, the determination processing part 612 predicts, as the planned travel route R0, a partial route of the target route R from the current position P0 to a position to be reached after the predetermined time period T1.

As another embodiment, when the combine harvester 1 is traveling at a position laterally shifted from the target route R, the determination processing part 612 may predict, as the planned travel route R0, a route from the current position PO to a position on the target route R at which the combine harvester 1 is predicted to arrive after the predetermined time period T1 elapses.

When the determination processing part 612 predicts the planned travel route R0, the determination processing part 612 sets, as an obstacle determination area 6B, an area within a predetermined distance from the planned travel route R0, and determines, in a case where a detection target is located within the obstacle determination area 6B, that the detection target is an obstacle. In addition, in a case where the detection target is located outside the obstacle determination area 6B, the determination processing part 612 determines that the detection target is not an obstacle. In this manner, the determination processing part 612 performs simulation, for the obstacle determination area 6B after the predetermined time period T1 elapses, at the current position P0, and determines an obstacle on the basis of whether the detection target is located within the obstacle determination area 6B. The predetermined distance is set to, for example, a distance obtained by adding a margin distance to a distance from the center of the combine harvester 1 in the left-right direction thereof to the left or right end portion thereof. That is, the determination processing part 612 sets, for the obstacle determination area 6B, a distance obtained by adding margin distances to the lateral width (the distance from the left end portion to the right end portion) of the vehicle body of the combine harvester 1.

In the example shown in Fig. 8, when the combine harvester 1 is located at the current position P0, the obstacle sensor 64 detects a detection target X1 located within the detection range 6A. However, the detection target X1 is located outside the obstacle determination area 6B, and thus the determination processing part 612 determines that the detection target X1 is not an obstacle. On the other hand, when the detection target X1 is located within the obstacle determination area 6B, the determination processing part 612 determines that the detection target X1 is an obstacle. Note that Fig. 8 shows five obstacle determination areas 6B for respective predetermined time periods T1, that is, five simulation results, in an overlapping manner.

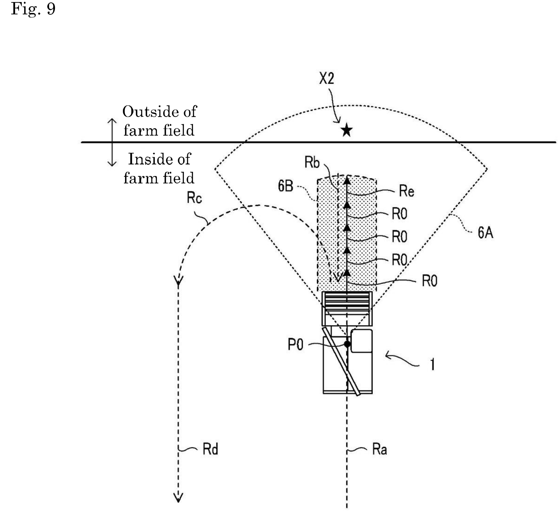

Fig. 9 shows another example of the target route R. In the target route R shown in Fig. 9, the combine harvester 1 performs straight travel on a straight route Ra to a farm field edge (boundary ridge edge), temporarily stops at the farm field edge, then travels backward on a straight route Rb, temporarily stops at an end point of the straight route Rb, then travels forward and turns on a turning route Rc, and then travels forward on a straight route Rd. In this case, the determination processing part 612 predicts (generates), at a current position P0 (current time point), a planned travel route R0 from the current time point to a time point after the predetermined time period T1.

In the example shown in Fig. 9, when the combine harvester 1 is located at the current position P0, the obstacle sensor 64 detects a detection target X2 located within the detection range 6A. However, the detection target X2 is located outside the obstacle determination area 6B, and thus the determination processing part 612 determines that the detection target X2 is not an obstacle. Here, the planned travel route Re indicates a route generated when the combine harvester 1 arrives at an end point of the straight route Ra. In this manner, even when the combine harvester 1 comes closest to a farm field edge, since the detection target X2 is located outside the obstacle determination area 6B, the determination processing part 612 determines that the detection target X2 is not an obstacle. That is, it is possible to avoid determination that the detection target X2 located near a farm field edge (such as a boundary ridge edge) is an obstacle.

As another embodiment, the determination processing part 612 may determine the position of the detection target X2, and determine that the detection target X2 is not an obstacle in a case where the determination processing part 612 determines that the detection target X2 is located outside the farm field. In this case, for example, even when the detection target X2 is located within the obstacle determination area 6B, the determination processing part 612 determines that the detection target X2 is not an obstacle when the detection target X2 is located outside the farm field. Note that the detection target X2 is, for example, an operator standing by to perform work (discharge work, replenishment work, or the like) at a ridge edge (discharge position of a harvested crop, replenishment position of fuel, or the like). As another example, the detection target X2 may be a ridge, a steel tower, or the like. Note that, for a fixed object such as a ridge or a steel tower, the obstacle detection device 60 may execute the obstacle determination processing when the obstacle sensor 64 detects the fixed object, or may execute the obstacle determination processing on the basis of map information in which the fixed object is registered in advance.

As described above, the determination processing part 612 predicts (simulates) the planned travel route R0 and the obstacle determination area 6B at the current position of the combine harvester 1, and determines whether a detection target is an obstacle. The determination processing part 612 performs the simulation at a predetermined cycle (each predetermined time period T1) in accordance with the automatic travel of the combine harvester 1. Further, the determination processing part 612 may perform the simulation at a predetermined cycle (each predetermined time period T1) until a detection target disappears from the detection range 6A, on condition that the obstacle sensor 64 has detected the detection target.

The output processing part 613 outputs countermeasure information in accordance with the determination result of the determination processing part 612 to the vehicle control device 11 and the operation terminal 30. Specifically, when a detection target is detected, the output processing part 613 outputs (provides notification of) detection information indicating that the detection target is detected to the operation terminal 30, and causes the operation terminal 30 to display the detection information. Note that the output processing part 613 may transmit the detection information to the operation terminal 30 by e-mail. In addition, when a detection target is detected, the output processing part 613 outputs vehicle control information (stop instruction, deceleration instruction, notification instruction, avoidance travel instruction, or the like) for controlling the combine harvester 1 to the vehicle control device 11, and causes the vehicle control device 11 to execute vehicle control processing (stop processing, deceleration processing, notification processing, avoidance travel processing, or the like). A specific example of the vehicle control processing will be described later.

Note that the output processing part 613 may be configured to output the countermeasure information to the vehicle control device 11 and the operation terminal 30 in a case where the determination processing part 612 determines that the detection target is an obstacle, and the output processing part 613 may be configured not to output the countermeasure information to the vehicle control device 11 and the operation terminal 30 in a case where the determination processing part 612 determines that the detection target is not an obstacle.

Further, in a case where the determination processing part 612 determines that the detection target is not an obstacle, the output processing part 613 may notify the operator of notification information including information that the detection target is detected and information that the combine harvester 1 is caused to continue automatically traveling. As a result, the operator can grasp information that the automatic travel is continued without stopping even though the fact the detection target is detected.

The vehicle control device 11 includes control units such as a CPU, a ROM, and a RAM. The CPU is a processor that executes various types of calculation processing. The ROM is a non-volatile storage part in which control programs such as a BIOS and an OS for causing the CPU to execute the various types of calculation processing are stored in advance. The RAM is a volatile or non-volatile storage part that stores various types of information, and is used as a temporary storage memory for various types of processing executed by the CPU. Moreover, the vehicle control device 11 controls the combine harvester 1 by executing, with the CPU, various control programs stored in advance in the ROM or the storage part 51.

Specifically, as shown in Fig. 1, the vehicle control device 11 includes various processing parts such as a travel processing part 111. Note that the vehicle control device 11 functions as the various processing parts by executing, with the CPU, various types of processing according to the automatic travel program. Further, a part or all of the processing parts may be configured with an electronic circuit. Note that, the automatic travel program may be a program for causing a plurality of processors to function as the processing part.

The travel processing part 111 controls travel of the combine harvester 1. For example, in a case where the travel mode of the combine harvester 1 is automatic travel (automatic travel mode), the travel processing part 111 causes the combine harvester 1 to automatically travel on the basis of position information (positioning information) indicating a current position of the combine harvester 1 measured by the positioning unit 52. For example, when the combine harvester 1 satisfies a start condition of automatic travel and a travel start instruction is acquired from the operator, the travel processing part 111 causes the automatic travel of the combine harvester 1 to be started on the basis of the positioning information. For example, the travel processing part 111 causes the combine harvester 1 to automatically travel from the work start position S to the work end position G along a target route generated and set in advance in the operation terminal 30.

Note that, in a case where the travel mode of the combine harvester 1 is manual travel (manual travel mode), the combine harvester 1 can be caused to manually travel on the basis of an operation (manual operation) from the operator. For example, the travel processing part 111 acquires operation information corresponding to a driving operation such as a steering wheel operation, a speed change operation, a travel direction switching operation, or a brake operation from the operator, and causes a travel operation to be performed on the basis of the operation information.

In addition, when the combine harvester 1 detects a detection target (obstacle) during automatic travel, the travel processing part 111 executes predetermined countermeasure processing. Specifically, the travel processing part 111 executes countermeasure processing such as travel control processing for controlling the travel of the combine harvester 1 or notification processing for providing notification with a warning sound, on the basis of the countermeasure information (stop instruction, deceleration instruction, notification instruction, avoidance travel instruction, or the like) output from the obstacle detection device 60 (output processing part 613). On the other hand, in a case where the detection target is determined to be not an obstacle, the travel processing part 111 causes the automatic travel of the combine harvester 1 to be continued without causing the countermeasure processing to be executed.

Specifically, the travel processing part 111 causes the automatic travel of the combine harvester 1 to be stopped, in a case where an obstacle (a detection target determined as an obstacle) is located in the stop control range. In addition, the travel processing part 111 causes the vehicle speed of the combine harvester 1 to be decelerated, in a case where the obstacle is located in the deceleration control range. Further, the travel processing part 111 causes the combine harvester 1 to provide notification with a warning sound, in a case where the obstacle is located in the notification control range.

In addition, the travel processing part 111 causes the combine harvester 1 to perform avoidance travel along an avoidance route on which the combine harvester 1 can avoid an obstacle. For example, the travel processing part 111 generates, as the avoidance route, the shortest route that extends from the current position PO to a point at which the combine harvester 1 returns to the target route R after avoiding an obstacle, and causes the combine harvester 1 to automatically travel along the avoidance route. Note that the travel processing part 111 may cause the combine harvester 1 to stop (cause the vehicle travel of the combine harvester 1 to be stopped), in a case where the avoidance route is unable to be connected to the target route R. For example, in a case where the avoidance route is unable to be connected to a start point of a work route or a start point of a turning route included in the target route R, the travel processing part 111 causes the combine harvester 1 to stop, without generating the avoidance route and causing the avoidance travel to be performed. In addition, for example, in a case where the avoidance route is set outside the farm field (such as a boundary ridge) or in the worked area, it is difficult to travel along the avoidance route. Therefore, the travel processing part 111 causes the combine harvester 1 to stop, without generating the avoidance route and causing the avoidance travel to be performed.

In this manner, the travel processing part 111 generates the avoidance route at a time point at which a detection target is detected and the detection target is determined to be an obstacle, and causes the avoidance travel to be started on condition that the obstacle can be avoided and return to the target route R can be made by using the avoidance route, and causes the automatic travel to be stopped in a case where it is determined that the return to the target route R is unable to be made by using the avoidance route.

In addition, the travel processing part 111 controls travel in accordance with an instruction acquired from the operation terminal 30. For example, upon acquisition of a travel start instruction from the operation terminal 30, the travel processing part 111 causes automatic travel of the combine harvester 1 to be started, and upon acquisition of a travel stop instruction from the operation terminal 30, the travel processing part 111 causes the automatic travel of the combine harvester 1 to be stopped.

### [Operation Terminal 30]

As shown in Fig. 1, the operation terminal 30 is an information processing device including an operation control part 31, a storage part 32, the operation and display part 33, a communication part 34, and the like. The operation terminal 30 includes, for example, a tablet terminal.

The communication part 34 is a communication interface for connecting the operation terminal 30 to the communication network N1 in a wired or wireless manner and for executing data communication according to a predetermined communication protocol with external equipment such as one or more combine harvesters 1 via the communication network N1.

The operation and display part 33 is a user interface including a display portion such as a liquid crystal display or an organic EL display that displays various types of information, and an operation portion such as a touch panel, a mouse, or a keyboard that receives an operation. The operator can operate the operation portion to perform an operation for registering various types of setting information, on an operation screen displayed on the display portion. In addition, the operator can operate the operation portion to provide an automatic travel instruction to the combine harvester 1. Further, the operator can grasp the travel state of the combine harvester 1 automatically traveling in the farm field F, from a travel path displayed on the operation terminal 30, at a place away from the combine harvester 1.

The storage part 32 is a non-volatile storage part such as an HDD, an SSD, or a flash memory that stores various types of information. The storage part 32 stores a control program for causing the operation control part 31 to execute predetermined control processing. For example, the control program is recorded in a non-transitory manner in a computer-readable recording medium such as a flash ROM, an EEPROM, a CD, or a DVD, and is read by a predetermined reading device (not shown) provided in the operation terminal 30 and stored in the storage part 32. Note that the control program may be downloaded from a server (not shown) to the operation terminal 30 via the communication network N1 and may be stored in the storage part 32. Further, the storage part 32 may also store work information transmitted from the combine harvester 1.

In addition, a dedicated application for causing the combine harvester 1 to automatically travel is installed in the storage part 32. The operation control part 31 starts the dedicated application, and executes setting processing for various types of setting information related to the combine harvester 1, provision of an automatic travel instruction to the combine harvester 1, and the like.

The operation control part 31 includes control units such as a CPU, a ROM, and a RAM. The CPU is a processor that executes various types of calculation processing. The ROM is a non-volatile storage part in which control programs such as a BIOS and an OS for causing the CPU to execute the various types of calculation processing are stored in advance. The RAM is a volatile or non-volatile storage part that stores various types of information, and is used as a temporary storage memory for various types of processing executed by the CPU. Moreover, the operation control part 31 controls the operation terminal 30 by executing, with the CPU, various control programs stored in advance in the ROM or the storage part 32.

As shown in Fig. 1, the operation control part 31 includes various processing parts such as a setting processing part 311 and an output processing part 312. Note that the operation control part 31 functions as the various processing parts by executing, with the CPU, various types of processing according to the control programs. Further, a part or all of the processing parts may be configured with an electronic circuit. Note that the control program may be a program for causing a plurality of processors to function as the processing part.

The setting processing part 311 sets various types of setting information for the combine harvester 1 to perform automatic travel. Specifically, the setting processing part 311 sets farm field information related to the farm field. The farm field information includes, for example, a shape, a size, and position information (coordinates and the like) of the outermost periphery of the farm field, measurement point data that constitutes the outermost periphery of the farm field, and a shape, a size, and position information (coordinates and the like) of a work area in the farm field where work is performed in the farm field. In addition, the farm field information also includes an address of the farm field, a registration name and a registration date of the farm field information, a registration name and a registration date of the work area in the farm field, and the like. The setting processing part 311 receives a registration operation for the farm field information from the operator to set the farm field information.

In addition, the setting processing part 311 creates a target route R including a work route and a turning route. For example, the operator selects a route pattern, a turning type, and the like on a setting screen (not shown). The route pattern includes "reciprocating reaping" in which reaping is performed for a plurality of courses with reciprocating travel thereon, and "circling reaping" in which reaping is performed with repeated circling travel on courses along an inner periphery of the work area in the farm field while the circling travel is gradually shifted toward the center side, and the operator selects one of the route patterns. Further, the operator can correct, on the setting screen, a turning radius at the time of turning in the work of reciprocating reaping and circling reaping.

In addition, the setting processing part 311 creates a work route on the basis of information such as the farm field information, the route pattern, the turning type, and the turning radius. The setting processing part 311 registers route information (target route R) on the created work route in association with the farm field F.

In addition, the setting processing part 311 sets work information related to work performed by the combine harvester 1. The work information includes information related to reaping work, information on mid-course work performed by the combine harvester 1 at a predetermined position in the middle of reaping work, and the like. For example, when the storage amount of the storage tank 27 (see Fig. 2) reaches a predetermined amount (upper limit value) during reaping work, the combine harvester 1 moves to a discharge position in the farm field F, and discharges grains stored in the storage tank 27 to a transport vehicle. In addition, for example, when the amount of fuel reaches a predetermined amount (lower limit value) during reaping work, the combine harvester 1 moves to a replenishment position in the farm field F to replenish fuel. The setting processing part 311 sets the discharge position and the replenishment position at any positions in the farm field F, in accordance with a setting operation from the operator. The work information includes information such as the upper limit value of the storage amount and the discharge position, and the lower limit value of the fuel and the replenishment position.

In addition, the setting processing part 311 sets a travel speed (vehicle speed) of the combine harvester 1. For example, the operator can set a vehicle speed of straight travel, a turning vehicle speed, and a vehicle speed of backward travel for each of work and non-work times, on the setting screen.

In addition to the information described above, the setting processing part 311 sets known information such as a type of combine harvester 1 (the maximum number of reaping rows), a vehicle width, and a vehicle length.

The output processing part 312 outputs the various types of setting information set by the setting processing part 311 to the combine harvester 1. In addition, the output processing part 312 outputs a work start instruction and a work stop instruction to the combine harvester 1, on the basis of operations from the operator.

When the operation control part 31 receives the work start instruction operation from the operator, the output processing part 312 outputs the work start instruction to the combine harvester 1. As a result, the vehicle control device 11 of the combine harvester 1 acquires the work start instruction from the operation terminal 30. When the vehicle control device 11 acquires the work start instruction, the vehicle control device 11 causes work and travel of the combine harvester 1 to be started. In addition, when the operation control part 31 receives the work stop instruction operation from the operator, the output processing part 312 outputs the work stop instruction to the combine harvester 1. As a result, the vehicle control device 11 of the combine harvester 1 acquires the work stop instruction from the operation terminal 30. When the vehicle control device 11 acquires the work stop instruction, the vehicle control device 11 causes the work and the travel of the combine harvester 1 to be stopped.

A display processing part 313 causes the operation and display part 33 to display various types of information. Specifically, the display processing part 313 causes map information on the farm field F, the target route R, the current position of the combine harvester 1, and the like to be displayed on a travel screen. In addition, the display processing part 313 causes an image captured by the camera 63 during automatic travel to be displayed on the travel screen. Further, when the combine harvester 1 detects a detection target during automatic travel, the display processing part 313 causes information indicating that the detection target is detected and the position of the detection target to be displayed. Further, in a case where the detection target is determined to be an obstacle, the display processing part 313 may cause information indicating that the obstacle is detected and the position of the obstacle to be displayed.

Further, when the combine harvester 1 detects a detection target during automatic travel, the display processing part 313 may cause the planned travel route R0 and the obstacle determination area 6B to be displayed (see Figs. 8 and 9). That is, when the obstacle detection device 60 detects a detection target, the display processing part 313 may cause the operation terminal 30 to display a simulation result related to the travel route of the combine harvester 1 up to a point after the predetermined time period T1.

Note that the operation terminal 30 may be able to access a website (agricultural support site) of an agricultural support service provided by a server (not shown) via the communication network N1. In this case, the operation terminal 30 can function as a terminal for operating the server, by the operation control part 31 executing a browser program. Moreover, the server includes the processing parts described above, and executes each piece of processing.

### [Automatic Travel Processing]

An example of the automatic travel processing executed by the automatic travel system 10 will be described below with reference to Fig. 10. Note that the automatic travel processing includes the obstacle detection processing executed by the obstacle detection device 60.

Note that, the present invention can be understood as an invention of an automatic travel method (an example of an automatic travel method of the present invention) for executing one or a plurality of steps included in the automatic travel processing. Further, one or a plurality of steps included in the automatic travel processing described here may be omitted as appropriate. Note that steps in the automatic travel processing may be executed in a different order as long as similar operation and effect are achieved. Further, here, as an example, a case will be described in which the vehicle control device 11 and the obstacle detection device 60 execute steps in the automatic travel processing. However, an automatic travel method in which one or a plurality of processors dispersedly execute steps in the automatic travel processing is also considered as another embodiment. The vehicle control device 11 and the obstacle detection device 60 execute the automatic travel processing when automatic travel of the combine harvester 1 is started.

### <Step S1>

In step S1, the obstacle detection device 60 determines whether the combine harvester 1 has detected a detection target. For example, in a case where a detection target is included in the detection range 6A of the obstacle sensor 64 (see Figs. 8 and 9), the obstacle detection device 60 determines that the detection target has been detected. In a case where the detection target has been detected (S1: Yes), the obstacle detection device 60 causes the processing to proceed to step S2. On the other hand, in a case where the detection target has not been detected (S1: No), the obstacle detection device 60 causes the processing to proceed to step S9. The obstacle detection device 60 executes determination processing for a detection target while the combine harvester 1 automatically travels.

### <Step S2>

In step S2, the obstacle detection device 60 predicts (simulates) the planned travel route R0 of the combine harvester 1. Specifically, the obstacle detection device 60 predicts the planned travel route R0 from a current position P0 of the combine harvester 1 to a position to be reached after the predetermined time period T1, on the basis of the target route R. For example, the obstacle detection device 60 predicts, as the planned travel route R0, a route along the target route R from the current position PO to a position on the target route R at which the combine harvester 1 is predicted to arrive after the predetermined time period T1 elapses (see Figs. 8 and 9).

### <Step S3>

In step S3, the obstacle detection device 60 sets the obstacle determination area 6B. Specifically, the obstacle detection device 60 sets, for the obstacle determination area 6B, an area obtained by adding margin distances to the lateral width (the distance from the left end portion to the right end portion) of the combine harvester 1 (see Figs. 8 and 9).

### <Step S4>

In step S4, the obstacle detection device 60 determines whether the detection target is located within the obstacle determination area 6B. In a case where the obstacle detection device 60 determines that the detection target is located within the obstacle determination area 6B (S4: Yes), the obstacle detection device 60 causes the processing to proceed to step S5. On the other hand, in a case where the obstacle detection device 60 determines that the detection target is located outside the obstacle determination area 6B (S4: No), the obstacle detection device 60 causes the processing to proceed to step S9. In this manner, when the detection target is detected, the obstacle detection device 60 determines whether the detection target is located within the obstacle determination area 6B simulated at that time point (current position PO).

### <Step S5>

In step S5, the obstacle detection device 60 determines that the detection target is an obstacle. That is, in a case where the detection target is located within the obstacle determination area 6B simulated at a time point at which the detection target is detected (the current position P0), the obstacle detection device 60 determines that the detection target will become an obstacle that obstructs the travel of the combine harvester 1 at a position ahead of the current position P0. In a case where the detection target is located outside the obstacle determination area 6B, the obstacle detection device 60 determines that the detection target will not become an obstacle that obstructs the travel of the combine harvester 1.

### <Step S6>

In step S6, the vehicle control device 11 executes countermeasure processing. Specifically, the vehicle control device 11 causes the automatic travel of the combine harvester 1 to be stopped, in a case where the detection target (obstacle) is located in the stop control range. In addition, the vehicle control device 11 causes the vehicle speed of the combine harvester 1 to be decelerated, in a case where the detection target (obstacle) is located in the deceleration control range. Moreover, the vehicle control device 11 causes the combine harvester 1 to provide notification with a warning sound, in a case where the detection target (obstacle) is located in the notification control range. Further, the vehicle control device 11 generates an avoidance route for avoiding the detection target (obstacle), and causes the combine harvester 1 to automatically travel along the avoidance route.

### <Step S7>

In step S7, the obstacle detection device 60 determines whether the detection target (obstacle) is located outside the obstacle determination area 6B as a result of being out of a state within the obstacle determination area 6B. In a case where the obstacle detection device 60 determines that the detection target (obstacle) is located outside the obstacle determination area 6B (S7: Yes), the obstacle detection device 60 causes the processing to proceed to step S8. On the other hand, in a case where the obstacle detection device 60 determines that the detection target (obstacle) is in a state of being still located within the obstacle determination area 6B (S7: No), the obstacle detection device 60 causes the processing to proceed to step S6. The vehicle control device 11 continues the countermeasure processing while the detection target (obstacle) is located within the obstacle determination area 6B, and ends the countermeasure processing when the detection target is located outside the obstacle determination area 6B.

### <Step S8>

In step S8, the vehicle control device 11 ends the countermeasure processing. For example, in a case where the obstacle detection device 60 detects an obstacle within the stop control range, the vehicle control device 11 causes the combine harvester 1 to stop, and thereafter, when the operator removes the obstacle and the obstacle disappears from the obstacle determination area 6B, the vehicle control device 11 ends the stop processing for the combine harvester 1 and resumes the automatic travel.

In addition, for example, in a case where the obstacle detection device 60 detects an obstacle within the deceleration control range, the vehicle control device 11 causes the combine harvester 1 to decelerate, and thereafter, when the operator removes the obstacle and the obstacle disappears from the obstacle determination area 6B, the vehicle control device 11 ends the deceleration processing for the combine harvester 1 and causes the speed to increase to the original set speed.

Moreover, for example, in a case where the obstacle detection device 60 detects the obstacle within the notification control range, the vehicle control device 11 causes the combine harvester 1 to provide notification with a warning sound, and thereafter, when the operator removes the obstacle and the obstacle disappears from the obstacle determination area 6B, the vehicle control device 11 causes the notification with the warning sound to be stopped.

Further, for example, in a case where the obstacle detection device 60 detects an obstacle within the stop control range, the vehicle control device 11 causes the combine harvester 1 to perform avoidance travel along an avoidance route, and when the combine harvester 1 returns to the target route R, the vehicle control device 11 ends the avoidance travel processing for the combine harvester 1 and causes the automatic travel to be resumed along the target route R.

### <Step S9>

In step S9, the vehicle control device 11 determines whether the combine harvester 1 has arrived at the work end position G (see Fig. 5). In a case where the vehicle control device 11 determines that the combine harvester 1 has arrived at the work end position G (S9: Yes), the vehicle control device 11 ends the automatic travel processing. In a case where the vehicle control device 11 determines that the combine harvester 1 has not arrived at the work end position G (S9: No), the vehicle control device 11 causes the processing to proceed to step S1. Until the combine harvester 1 arrives at the work end position G, the vehicle control device 11 repeatedly executes the processing described above (S9: No).

In this manner, the automatic travel system 10 causes the combine harvester 1 to automatically travel from the work start position S to the work end position G along the target route R, and executes the processing of steps S2 to S8 described above in a case where a detection target is detected during the automatic travel.

As described above, the automatic travel system 10 according to the present embodiment causes a work vehicle (for example, the combine harvester 1) to automatically travel along the target route R in the farm field F, and determines, in a case where the obstacle sensor 64 that can detect a detection target within a predetermined range (detection range 6A) detects a detection target, whether the detection target is an obstacle that obstructs travel of the work vehicle, on the basis of a planned travel route on which the work vehicle is planned to travel from a time point at which the obstacle sensor 64 detects the detection target. In addition, the automatic travel system 10 causes, in a case where the detection target is determined to be an obstacle, countermeasure processing to be executed, and causes, in a case where the detection target is determined to be not an obstacle, the work vehicle to continue automatically traveling without causing the countermeasure processing to be executed.

For example, in a case where the detection target is determined to be an obstacle, the automatic travel system 10, for example, causes the work vehicle to stop, causes the travel speed of the work vehicle to be decelerated, causes the work vehicle to provide notification with a warning sound, or causes the work vehicle to perform avoidance travel.

On the other hand, in a case where the detection target is determined to be not an obstacle, the automatic travel system 10 causes the automatic travel of the work vehicle to be continued. That is, as shown in Figs. 8 and 9, even in a case where the detection targets (X1, X2) are located within the detection range 6A of the obstacle sensor 64, when the detection target X1 is located outside the obstacle determination area 6B, the automatic travel system 10 omits the countermeasure processing and causes the automatic travel of the work vehicle to be continued.

According to the above configuration, even when the obstacle sensor 64 detects the detection target, the automatic travel of the work vehicle can be continued in a case where a possibility that the work vehicle collides with the detection target is low. Therefore, it is possible to avoid a decrease in work efficiency when the work vehicle detects a detection target during automatic travel.

Note that in a case where the detection target is determined to be not an obstacle, the automatic travel system 10 may cause the automatic travel to be continued while causing the work vehicle to decelerate. Further, in the case where the detection target is determined to be not an obstacle, the automatic travel system 10 may cause the automatic travel to be continued while causing notification with a warning sound to be provided.

### [Other Embodiments]

As another embodiment of the automatic travel system 10 according to the present invention, the obstacle detection processing and the automatic travel processing may be executed in accordance with a type of a detection target. Specifically, in a case where the detection target is a moving object, the obstacle detection device 60 may determine whether the moving object is an obstacle, on the basis of a planned travel route of the work vehicle and a planned movement route of the moving object.

For example, the obstacle detection device 60 determines whether the detection target is a moving object, on the basis of a captured image acquired from the camera 63 and measurement information acquired from the obstacle sensor 64. In a case where the obstacle detection device 60 determines that the detection target is a moving object, the obstacle detection device 60 predicts a planned movement route of the moving object. For example, in a case where the obstacle detection device 60 determines that the detection target is a work vehicle (another vehicle), the obstacle detection device 60 predicts a planned travel route of the other vehicle. Specifically, the obstacle detection device 60 may estimate the movement direction and the movement speed of the other vehicle, on the basis of the captured image and the measurement information, to predict the planned travel route. Further, in a case where travel information on the other vehicle can be acquired, the obstacle detection device 60 may predict the planned travel route on the basis of a target route of the other vehicle. The obstacle detection device 60 determines whether the other vehicle is an obstacle, on the basis of the planned travel route of the host vehicle and the planned travel route of the other vehicle.

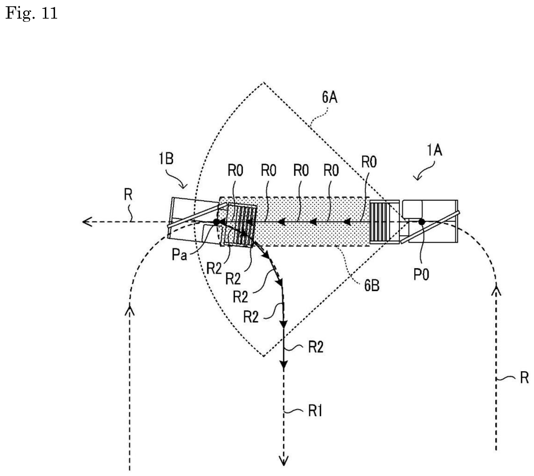

Fig. 11 shows a specific example of the above configuration. Here, an example is shown in which a combine harvester 1A automatically travels along a target route R and a combine harvester 1B, which is another vehicle, automatically travels along a target route R1. When the obstacle detection device 60 of the combine harvester 1A detects, at a current position P0, the combine harvester 1B located in a detection range 6A, the obstacle detection device 60 determines whether the combine harvester 1B is an obstacle, on the basis of a planned travel route R0 of the combine harvester 1A and a planned travel route R2 of the combine harvester 1B. For example, the obstacle detection device 60 estimates the movement direction and the movement speed of the combine harvester 1B to predict the planned travel route R2, or acquires data of the target route R1 and travel information (such as a set vehicle speed) of the combine harvester 1B to predict the planned travel route R2.

For example, the obstacle detection device 60 predicts (simulates), for the combine harvester 1B, the travel route (planned travel route R2) from a current position Pa to a position to be reached after the predetermined time period T1. For example, the determination processing part 612 generates, as the planned travel route R2, a straight route corresponding to a distance that the combine harvester 1B can travel for the predetermined time period T1.

The obstacle detection device 60 simulates, at the current time point of the current position P0, the respective positions of the combine harvester 1A and the combine harvester 1B to be reached after the predetermined time period T1 elapses, and determines whether the combine harvester 1B is an obstacle. The obstacle detection device 60 performs the simulation for each predetermined time period T1. Then, the obstacle detection device 60 determines that the combine harvester 1B is an obstacle, in a case where the combine harvester 1B will be present at a point of intersection, at which the planned travel route R0 and the planned travel route R2 will intersect with each other, at a time point at which the combine harvester 1A will pass through the point of intersection. On the other hand, the obstacle detection device 60 determines that the combine harvester 1B is not an obstacle, in a case where the combine harvester 1B will not be present at the point of intersection because the combine harvester 1B will have already finished passing through the point of intersection at the time point at which the combine harvester 1A will pass through the point of intersection.

In a case where the obstacle detection device 60 has performed the determination as to whether the combine harvester 1B is an obstacle, the vehicle control device 11 executes countermeasure processing in the combine harvester 1A. For example, the vehicle control device 11 causes the combine harvester 1A to decelerate or stop until the combine harvester 1B passes through the point of intersection. After the combine harvester 1B passes through the point of intersection, the vehicle control device 11 causes the vehicle speed of the combine harvester 1A to increase to the original set speed or causes the automatic travel to be resumed. As another embodiment, in a case where the combine harvester 1A and the combine harvester 1B can communicate with each other, the vehicle control device 11 may instruct the combine harvester 1B to decelerate or stop before the point of intersection until the combine harvester 1A passes through the point of intersection.

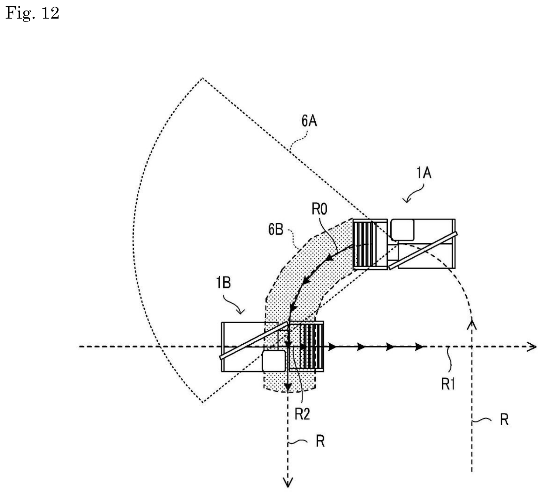

Fig. 12 shows another travel example of the combine harvester 1B. In the example shown in Fig. 12, similarly to the example shown in Fig. 11, the obstacle detection device 60 simulates, at the current time point of a current position R0, the respective positions of the combine harvester 1A and the combine harvester 1B for each predetermined time period T1, and determines that the combine harvester 1B is an obstacle in a case where the combine harvester 1B will be present at a point of intersection, at which a planned travel route R0 and a planned travel route R2 will intersect with each other, at a time point at which the combine harvester 1A will pass through the point of intersection. On the other hand, the obstacle detection device 60 determines that the combine harvester 1B is not an obstacle, in a case where the combine harvester 1B will not be present at the point of intersection because the combine harvester 1B will have already finished passing through the point of intersection at the time point at which the combine harvester 1A will pass through the point of intersection.

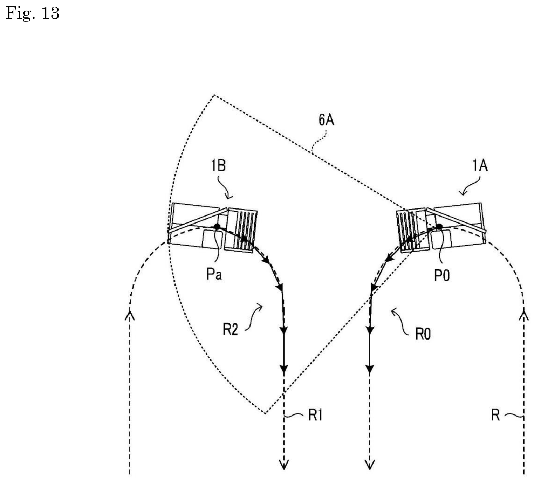

Fig. 13 shows another travel example of the combine harvester 1B. In the example shown in Fig. 13, a planned travel route R0 of the combine harvester 1A and a planned travel route R2 of the combine harvester 1B do not intersect with each other and the combine harvester 1B does not enter the obstacle determination area of the combine harvester 1A, and thus the combine harvester 1B is determined to be not an obstacle.

According to the configurations shown in Figs. 11 to 13, for example, in a case where the same farm field F is subjected to cooperative work of a plurality of work vehicles, it is possible to avoid stop of automatic travel due to unnecessarily determination that both vehicles are obstacles, and thus it is possible to avoid a decrease in work efficiency.

As another embodiment of the present invention, the obstacle detection device 60 may determine whether a detection target is an obstacle, on the basis of a planned travel route of a work vehicle and a posture change state of a work machine on the planned travel route. For example, the combine harvester 1 causes the reaping part 3 to be lifted and lowered between the work position (see Fig. 6) and the non-work position (see Fig. 7). When the reaping part 3 is at the non-work position, a space having a height H1 is formed between the reaping part 3 and the ground. In a case where the combine harvester 1 travels in a state of causing the reaping part 3 to be lifted to the non-work position, even if a detection target enters the space, the detection target is less likely to come into contact with the combine harvester 1. Therefore, the obstacle detection device 60 predicts, for example, the planned travel route R0 of the combine harvester 1 up to a point after the predetermined time period T1 and the posture (work position or non-work position) of the reaping part 3, and excludes a range under the reaping part 3 (range of the height H1) from the obstacle determination area 6B in a case where the reaping part 3 is predicted to be at the non-work position.

As a result, for example, in a case where the obstacle detection device 60 detects a detection target in the range under the reaping part 3, the vehicle control device 11 causes the automatic travel to be continued without causing the countermeasure processing to be executed. Note that the work machine that changes its posture may be, in addition to the reaping part, a sprayer, a rotary tiller, or the like that is connected to a tractor to be able to be lifted and lowered.

In this manner, the obstacle detection device 60 may set the obstacle determination area 6B on the basis of the posture and the position of the work machine of the work vehicle. For example, the obstacle detection device 60 may set the predetermined distance with respect to the planned travel route R0, on the basis of the posture and the position of the work machine of the work vehicle. Further, as another embodiment, the obstacle detection device 60 may set the predetermined distance, on the basis of the vehicle speed of the work vehicle, a lifted or lowered position of the work machine, or the turning range. Further, the obstacle detection device 60 may set the obstacle determination area by calculating the outer shape size of the vehicle at predetermined time intervals while the work machine is lifted or lowered.

In the embodiment described above, the planned travel route is a route on which the combine harvester 1 can travel for a predetermined time period from a time point at which the obstacle sensor 64 detects a detection target. However, as another embodiment, the planned travel route may be a route from a current position of the work vehicle at a time point at which the obstacle detection device 60 detects the detection target to a position at a predetermined distance. The predetermined distance may be a preset distance, or may be set on the basis of the current vehicle speed of the combine harvester 1 or the position of a travel route (a straight route or a turning route). Further, the obstacle detection device 60 may predict the planned travel route, on the basis of a user operation that sets the predetermined time period or the predetermined distance. That is, the operator may be able to set the predetermined time period or the predetermined distance on the operation terminal 30. In addition, a change may be made as to whether authority for an operation of setting the predetermined time period or the predetermined distance is given to simply a specific user or to all users. Further, a range of the predetermined time period or the predetermined distance that can be set by a user may be set in advance.

In the embodiment described above, an example has been described in which a detection part that detects a detection target (obstacle) is the obstacle sensor 64 or the camera 63 mounted on the combine harvester 1. However, as another embodiment, the detection part may be a camera arranged outside the combine harvester 1. For example, the detection part may be a camera installed in the farm field, or may be a camera mounted on a flying object (a helicopter, a drone, or the like) that flies over the farm field. In a case where the detection part is a camera installed in the farm field or a camera of a flying object, the entire farm field may be set as a detection range.

As another embodiment of the present invention, the obstacle detection device 60 may set the planned travel route R0 and the obstacle determination area 6B on the basis of the vehicle speed, work content, and positioning accuracy of the work vehicle. For example, the obstacle detection device 60 may cause the obstacle determination area 6B in a case where the positioning accuracy is low to be larger than the obstacle determination area 6B in a case where the positioning accuracy is high.

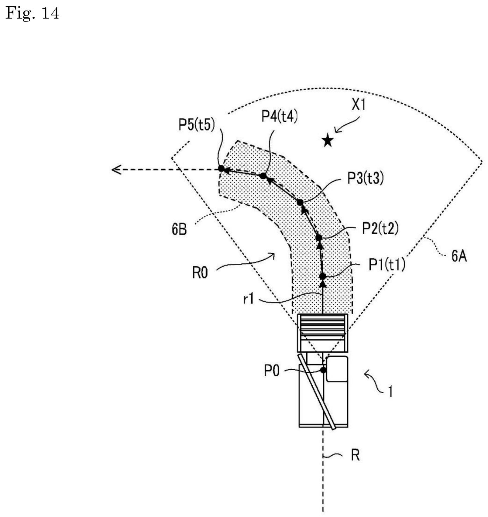

As another embodiment of the present invention, the obstacle detection device 60 (determination processing part 612) may predict a planned travel route R0 including a plurality of straight routes. For example, as shown in Fig. 14, the determination processing part 612 generates straight routes r1 corresponding to respective distances that the combine harvester 1 can travel for respective reference time periods t1, and generates a planned travel route R0 corresponding to a predetermined time period T1 (for example, T1 = t1×5). Specifically, the determination processing part 612 predicts (simulates), at a current position P0 (current time point), a position P1 of the combine harvester 1 after a time period t1 (reference time period t1×1) from the current time point, a position P2 of the combine harvester 1 after a time period t2 (reference time period t1×2) from the current time point, a position P3 of the combine harvester 1 after a time period t3 (reference time period t1×3) from the current time point, a position P4 of the combine harvester 1 after a time period t4 (reference time period t1×4) from the current time point, and a position P5 of the combine harvester 1 after a time period t5 (reference time period t1×5) from the current time point, and generates a route (turning route) connecting the respective positions P1 to P5 from the current position P0, as the planned travel route R0. Then, the determination processing part 612 sets an obstacle determination area 6B for the single planned travel route R0 including the plurality of straight routes r1.

The determination processing part 612 may set the planned travel route R0 and the obstacle determination area 6B in accordance with the size of the detection range 6A. For example, the determination processing part 612 sets a planned travel route R0 and an obstacle determination area 6B extending to an end of the detection range 6A for each predetermined time period T1. According to the above configuration, it is possible to early determine whether a detection target at a place distant from the combine harvester 1 is an obstacle.

Incidentally, the travel routes on which the work vehicle travels include (1) a work route on which accurate positional accuracy is required (a work route for planting work, a work route for reaping work, or the like), (2) a work route on which no problem occurs even if a vehicle position temporarily deviates (a work route for herbicide application work, a work route for tilling work, or the like), and (3) a route on which no work is performed (a movement route between work routes, or the like). In the travel routes of (2) and (3), a change to an avoidance route for avoiding an obstacle is allowed. However, in the travel route of (1), a change to the avoidance route is not allowed, and when an obstacle is detected, it is necessary to stop at that time point. In this manner, the avoidance travel is allowed or prohibited, in accordance with work content or a type of a travel route. Therefore, as another embodiment, the vehicle control device 11 may be configured to determine whether to cause the work vehicle to automatically travel along the avoidance route, or to cause the work vehicle to stop or decelerate, in accordance with work content of the work vehicle or a type of a travel route.

Further, for example, in a case where the work vehicle detects an obstacle while traveling on the travel route of (1) and stops the automatic travel (stops the vehicle travel), the vehicle control device 11 may notify the operator of a fact that the work vehicle is caused to stop, and the reason for being caused to stop or a surrounding situation, and receive an instruction from the operator as to whether the work vehicle is caused to resume automatically traveling. For example, when the vehicle travel is stopped due to a minor obstacle (such as twigs) that does not interfere with the travel, there is a case in which it is desired to ignore this and resume the automatic travel. In such a case, the operator can provide an instruction to resume the automatic travel, whereby the automatic travel can be resumed while the obstacle is ignored. Further, in a case where an avoidance route for avoiding an obstacle is generated, the operation terminal 30 may cause the avoidance route or a predicted course of the work vehicle to be displayed.

Note that the vehicle control device 11 may preset countermeasure processing (stop, deceleration, notification, avoidance travel, or the like) corresponding to work content of the work vehicle or a type of a travel route, in accordance with a setting operation of a user. For example, the vehicle control device 11 permits the user to set only "stop" for the travel route of (1), and permits the user to set "stop", "deceleration", and "avoidance travel" for the travel routes of (2) and (3).

Further, as another embodiment, in a case where the detection target is determined to be an obstacle, the vehicle control device 11 may execute countermeasure processing in accordance with a type of the obstacle. Specifically, the vehicle control device 11 may determine whether to cause the work vehicle to automatically travel along an avoidance route, or cause the work vehicle to stop or decelerate, in accordance with a type of the obstacle. For example, in a case where a person is determined to be an obstacle, the vehicle control device 11 causes the automatic travel of the combine harvester 1 to be stopped. In addition, for example, in a case where a branch of a tree, leaves, or the like are determined to be an obstacle, the vehicle control device 11 causes the combine harvester 1 to decelerate. Further, for example, in a case where a material or the like is determined to be an obstacle, the vehicle control device 11 causes the combine harvester 1 to perform avoidance travel.

Note that the vehicle control device 11 may preset countermeasure processing (stop, deceleration, notification, avoidance travel, or the like) corresponding to a type of an obstacle, in accordance with a setting operation of the user. Further, the vehicle control device 11 may set a limitation on countermeasure processing that can be set by the user, in accordance with a type of an obstacle. For example, the vehicle control device 11 permits the user to set only "stop" for "person", permits the user to set "stop" and "deceleration" for "branch of tree or leaves", and permits the user to set "stop" and "avoidance" for "material".

Further, as another embodiment, in a case where a detection target is determined to be an obstacle, the vehicle control device 11 may execute countermeasure processing (stop, deceleration, notification, avoidance travel, or the like), in accordance with work content of the work vehicle or a type of a travel route, and a type of an obstacle.

In this manner, in the embodiments described above, the automatic travel system 10 corresponds to a control system according to the present invention. However, the control system according to the present invention may include the obstacle detection device 60 alone, may include the obstacle detection device 60 and the vehicle control device 11, may include the work vehicle (combine harvester 1) alone, or may include the work vehicle and the operation terminal 30.

### [Additional Notes of Invention]

Outlines of the invention extracted from the embodiments will be additionally described below. Note that configurations and processing functions described in the following additional notes can be selected to be combined as desired.

### <Additional Note 1>

An automatic travel method, executed by one or more processors, the method including:
causing a work vehicle to automatically travel along a target route in a work area; and
determining, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

### <Additional Note 2>

The automatic travel method according to additional note 1, in which the planned travel route is a partial route of the target route or a route generated based on a current position of the work vehicle at the time point at which the detection part detects the detection target and the target route.

### <Additional Note 3>

The automatic travel method according to additional note 1 or 2, in which the planned travel route is a route on which the work vehicle can travel for a predetermined time period from the time point at which the detection part detects the detection target, or a route from a current position of the work vehicle at the time point at which the detection part detects the detection target to a position at a predetermined distance.

### <Additional Note 4>

The automatic travel method according to any one of additional notes 1 to 3, further including setting, as an obstacle determination area, an area within a predetermined distance from the planned travel route, and determining, in a case where the detection target is located within the obstacle determination area, that the detection target is the obstacle.

### <Additional Note 5>

The automatic travel method according to any one of additional notes 1 to 4, further including:
causing, in a case where the detection target is determined to be the obstacle, countermeasure processing to be executed; and
causing, in a case where the detection target is determined to be not the obstacle, the work vehicle to continue automatically traveling without causing the countermeasure processing to be executed.

### <Additional Note 6>

The automatic travel method according to additional note 5, further including, in the case where the detection target is determined to be the obstacle, causing the work vehicle to automatically travel along an avoidance route on which the work vehicle is capable of avoiding the obstacle, or causing the work vehicle to stop or decelerate.

### <Additional Note 7>

The automatic travel method according to additional note 6, further including causing, in a case where the avoidance route is unable to be connected to the target route, the work vehicle to stop.

### <Additional Note 8>

The automatic travel method according to any one of additional notes 1 to 7, further including notifying, in a case where the detection target is determined to be not the obstacle, a user of notification information including information that the detection target is detected and information that the work vehicle is caused to continue automatically traveling.

### <Additional Note 9>

The automatic travel method according to any one of additional notes 1 to 8, further including determining, in a case where the detection target is a moving object, whether the moving object is the obstacle, based on the planned travel route of the work vehicle and a planned movement route of the moving object.

### <Additional Note 10>

The automatic travel method according to any one of additional notes 1 to 9, further including determining whether the detection target is the obstacle, based on the planned travel route of the work vehicle and a posture change state of a work machine of the work vehicle on the planned travel route.

### <Additional Note 11>

The automatic travel method according to additional note 3, further including predicting the planned travel route, based on a user operation that sets the predetermined time period or the predetermined distance.

### <Additional Note 12>

The automatic travel method according to additional note 6, further including determining whether to perform the causing the work vehicle to automatically travel along the avoidance route, or the causing the work vehicle to stop or decelerate, in accordance with work content of the work vehicle.

### <Additional Note 13>

The automatic travel method according to additional note 6, further including, in a case where the work vehicle is caused to stop, notifying a user of a fact that the work vehicle is caused to stop, a reason for being caused to stop, and a surrounding situation, and receiving an instruction from the user as to whether the work vehicle is caused to resume automatically traveling.

### <Additional Note 14>

The automatic travel method according to additional note 6, further including causing an operation terminal of a user to display the avoidance route.

### <Additional Note 15>

The automatic travel method according to additional note 6, further including determining whether to perform the causing the work vehicle to automatically travel along the avoidance route, or the causing the work vehicle to stop or decelerate, in accordance with a type of the obstacle.

### <Additional Note 16>

The automatic travel method according to additional note 6, further including presetting the countermeasure processing corresponding to a type of the obstacle, in accordance with a setting operation of a user.

### <Additional Note 17>

An automatic travel program that causes one or more processors to execute:
causing a work vehicle to automatically travel along a target route in a work area; and
determining, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

### <Additional Note 18>

An automatic travel system including:
a travel processing part that causes a work vehicle to automatically travel along a target route in a work area; and
a determination processing part that determines, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

### LIST OF REFERENCE SIGNS

- 10: Automatic travel system
- 30: Operation terminal
- 31: Operation control part
- 311: Setting processing part
- 312: Output processing part
- 313: Display processing part
- 1: Combine harvester (work vehicle)
- 11: Vehicle control device
- 111: Travel processing part
- 60: Obstacle detection device
- 61: Detection control part
- 63: Camera
- 64: Obstacle sensor (detection part)
- 6A: Detection range
- 6B: Obstacle determination area
- 611: Acquisition processing part
- 612: Determination processing part
- 613: Output processing part
- F: Farm field
- S: Work start position
- G: Work end position
- R: Target route
- R1: Target route
- R0: Planned travel route
- R2: Planned travel route
- X1: Detection target
- X2: Detection target

## Claims

1. An automatic travel method comprising:
causing a work vehicle to automatically travel along a target route in a work area; and
determining, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

2. The automatic travel method according to claim 1, wherein the planned travel route is a partial route of the target route or a route generated based on a current position of the work vehicle at the time point at which the detection part detects the detection target and the target route.

3. The automatic travel method according to claim 1, wherein the planned travel route is a predicted route on which the work vehicle travels for a predetermined time period from the time point at which the detection part detects the detection target, or a predicted route from a current position of the work vehicle at the time point at which the detection part detects the detection target to a position at a predetermined distance.

4. The automatic travel method according to claim 1, further comprising setting, as an obstacle determination area, an area within a predetermined distance from the planned travel route, and determining, in a case where the detection target is located within the obstacle determination area, that the detection target is the obstacle.

5. The automatic travel method according to claim 1, further comprising:
causing, in a case where the detection target is determined to be the obstacle, countermeasure processing to be executed; and
causing, in a case where the detection target is determined to be not the obstacle, the work vehicle to continue automatically traveling without causing the countermeasure processing to be executed.

6. The automatic travel method according to claim 5, further comprising, in the case where the detection target is determined to be the obstacle, causing the work vehicle to automatically travel along an avoidance route on which the work vehicle is capable of avoiding the obstacle, or causing the work vehicle to stop or decelerate.

7. The automatic travel method according to claim 6, further comprising causing, in a case where the avoidance route is unable to be connected to the target route, the work vehicle to stop.

8. The automatic travel method according to claim 1, further comprising notifying, in a case where the detection target is determined to be not the obstacle, a user of notification information including information that the detection target is detected and information that the work vehicle is caused to continue automatically traveling.

9. The automatic travel method according to claim 1, further comprising determining, in a case where the detection target is a moving object, whether the moving object is the obstacle, based on the planned travel route of the work vehicle and a planned movement route of the moving object.

10. The automatic travel method according to claim 1, further comprising determining whether the detection target is the obstacle, based on the planned travel route of the work vehicle and a posture change state of a work machine of the work vehicle on the planned travel route.

11. The automatic travel method according to claim 3, further comprising predicting the planned travel route, based on a user operation that sets the predetermined time period or the predetermined distance.

12. The automatic travel method according to claim 6, further comprising determining whether to perform the causing the work vehicle to automatically travel along the avoidance route, or the causing the work vehicle to stop or decelerate, in accordance with work content of the work vehicle or a type of a travel route.

13. The automatic travel method according to claim 6, further comprising, in a case where the work vehicle is caused to stop, notifying a user of a fact that the work vehicle is caused to stop, a reason for being caused to stop, and a surrounding situation, and receiving an instruction from the user as to whether the work vehicle is caused to resume automatically traveling.

14. The automatic travel method according to claim 6, further comprising causing an operation terminal of a user to display the avoidance route.

15. The automatic travel method according to claim 6, further comprising determining whether to perform the causing the work vehicle to automatically travel along the avoidance route, or the causing the work vehicle to stop or decelerate, in accordance with a type of the obstacle.

16. The automatic travel method according to claim 6, further comprising presetting the countermeasure processing corresponding to a type of the obstacle, in accordance with a setting operation of a user.

17. An automatic travel program that causes one or more processors to execute:
causing a work vehicle to automatically travel along a target route in a work area; and
determining, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.

18. An automatic travel system comprising:
a travel processing part that causes a work vehicle to automatically travel along a target route in a work area; and
a determination processing part that determines, in a case where a detection part capable of detecting a detection target within a predetermined range detects the detection target, whether the detection target is an obstacle that obstructs travel of the work vehicle, based on a planned travel route on which the work vehicle is planned to travel from a time point at which the detection part detects the detection target.
